# FASCICULE DE BREVET EUROPEEN

(11) **EP 3 004 007 B1**
(45) Date de publication et mention de la délivrance du brevet: **10.11.2021**
(21) Numéro de dépôt: 14729639.6
(22) Date de dépôt: 06.06.2014
(51) Int. Cl.: C03C 15/02, B08B 13/00, C03C 23/00, C09K 13/02, C09K 13/04, C23F 1/16

(54) **PROCÉDÉ DE TRAITEMENT D'UNE SURFACE ET DISPOSITIF MIS EN UVRE**
VERFAHREN ZUM BEHANDELN EINER OBERFLÄCHE UND APARAT FÜR DIESES VERFAHREN
PROCESS OF TREATMENT A SURFACE AND APARATUS FOR THAT PROCESS

(30) Priorité: 07.06.2013 FR 1355290
(43) Date de publication de la demande: 13.04.2016
(73) Titulaire: Commissariat à l'Énergie Atomique et aux Énergies Alternatives, 75015 Paris (FR)
(72) Inventeur: PILON, Fabien, F-37170 Chambray-les-Tours (FR); BELLEVILLE, Philippe, F-37000 Tours (FR); LAMBERT, Sébastien, F-37800 Saint-Epain (FR); RONDEAU, Olivier, F-37260 Pont de Ruan (FR); THOMAS, Sandrine, F-37260 Monts (FR)
(74) Mandataire: Brevalex
(86) Numéro de dépôt international: PCT/EP2014/061856
(87) Numéro de publication internationale: WO 2014/195472

(56) Documents cités:
- FR-A1- 2 933 332
- JP-A- S58 225 532
- None

## Description

### DOMAINE TECHNIQUE

La présente invention concerne le domaine du traitement des surfaces et, plus particulièrement, le domaine du traitement des surfaces utilisant des solutions corrosives.

En effet, la présente invention propose un procédé et un dispositif pour un traitement corrosif de surfaces telles que des surfaces vitreuses, céramiques ou métalliques, ledit procédé et ledit dispositif mettant en œuvre un intermédiaire de diffusion pour appliquer la solution corrosive sur la surface, sans aucun mouvement relatif de la surface à traiter par rapport à l'intermédiaire de diffusion, une fois la 1^{ère} amenée en contact du 2^{nd}.

### ÉTAT DE LA TECHNIQUE ANTÉRIEURE

La durée de vie dans l'ultraviolet des optiques en verre de silice utilisées dans les grandes installations utilisant des lasers de forte puissance telles que le laser mégajoule (LMJ) a fait l'objet de nombreuses études. De ces études, il est maintenant clairement établi que la durée de vie des optiques en verre de silice à 351 nm dépend des endommagements de surface et de leur croissance.

Il est aujourd'hui communément admis que l'obtention de surfaces polies compatibles avec une faible densité de dommages réside dans la limitation des sources d'absorption induites par le procédé de polissage au niveau de l'interface, mais aussi dans la suppression de dommages sous-surfaciques introduits par les phases amonts de polissage telles que l'ébauchage.

A cet effet, le traitement par des acides ou acidage présente un intérêt pour améliorer la tenue aux flux des optiques. C'est pourquoi, de nombreux travaux ont été menés afin d'étudier le polissage de pièces par les acides et notamment dans le domaine de l'optique (verres en silice).

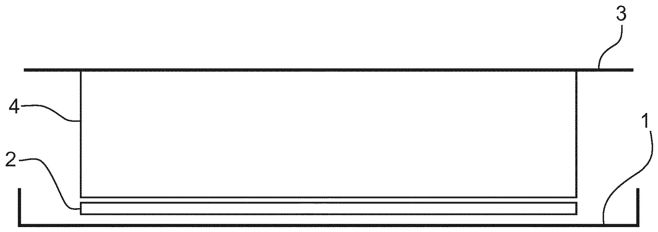

Pour améliorer la tenue au flux laser de composants optiques, un procédé a été développé en 2005 dans l'article de Néauport *et al* **[1]**, puis en 2007 dans l'article de Pilon **[2].** Le procédé d'acidage utilisé consiste à mettre en contact, pendant 10 min, l'échantillon de petite taille avec un mélange 90/10 (v/v) d'acide nitrique (HNO₃) concentré et de HF puis à rincer l'échantillon avec de l'eau dé-ionisée, ce protocole étant répété 8 fois. Comme présenté à la Figure 2 de **[1]** et à la Figure 1 de **[2],** l'échantillon est disposé sur 3 supports placés dans un récipient, moyennant quoi la face inférieure de l'échantillon est en contact par capillarité avec le mélange corrosif, une fois ce dernier directement versé dans le récipient.

Toutefois, la propagation du mélange corrosif par capillarité peut entraîner des différences en terme de temps de contact entre ce mélange et la surface à traiter provoquant, de fait, un acidage inhomogène particulièrement marqué et préjudiciable pour les surfaces de grande taille et des temps de contact courts. De plus, l'utilisation de supports crée, au niveau de la surface à traiter, des zones masquées non soumises au procédé d'acidage.

Le brevet US 6 649 077 **[3]** propose un procédé et un appareillage pour éliminer des couches de revêtement à la surface d'une plaque de semi-conducteur. Cette élimination suit un motif particulier à savoir une bande bordant la face inférieure de la plaque (référence « 508 », Figure 5).

Un tel motif est obtenu en maintenant la plaque en suspension au-dessus d'un socle grâce à un flux de gaz inerte et en faisant couler la solution corrosive sur la face supérieure de la plaque, lorsque cette dernière est en rotation. Plus particulièrement, la largeur de la bande éliminée est fonction de la zone de chevauchement entre la plaque et le jonc de bordure du socle puisque, dans l'espacement créé, la solution corrosive est amenée par capillarité (colonne 5, lignes 58-64).

Le procédé décrit dans **[3]** nécessite donc l'utilisation d'un système de gaufrier et d'un gaz inerte et implique donc la mise en place d'un système hermétique pour l'injection. De plus, il ne concerne que des zones particulières de pièces de petite dimension.

Une méthode d'acidage par capillarité est également décrite dans la demande internationale WO 2009/142704 **[4].** Cette demande vise notamment à fournir un procédé utilisant une moindre quantité de solution corrosive.

A cet effet, le procédé proposé dans **[4]** comprend les étapes consistant à (i) fournir une surface avec au moins un canal ouvert, ce dernier définissant la zone de matériel à éliminer et (ii) amener par capillarité la solution corrosive via le canal jusqu'à cette zone.

Il convient toutefois de noter que, même si le procédé décrit dans **[4]** permet d'utiliser moins de solution corrosive, il peut nécessiter l'utilisation d'un tensioactif pour accroître la mouillabilité de la solution corrosive au niveau des parois des canaux. Enfin, le procédé proposé ne concerne pas de grandes surfaces de traitement avec une garantie d'homogénéité et est sélective de certaines zones.

Toujours concernant le traitement d'optiques en silice afin d'augmenter leur résistance aux dommages provoqués par les lasers, la demande de brevet US 2011/0079931 **[5]** décrit un traitement réalisé par immersion dans deux bains successifs d'acides minéraux, avec une agitation ultrasonique ou mégasonique et un chauffage entre 50°C et 120°C. Ce traitement vise à éliminer les défauts surfaciques et sous-surfaciques présents après polissage en réalisant un enlèvement matière allant de 100 nm à 10 µm.

L'usage de ce procédé sur des surfaces de verre de silice polies est décrit par ailleurs dans l'article de Suratwala *et al,* 2010 **[6]**. Dans cette publication, le verre de silice est plongé dans différentes solutions acides à base de HF et soumis à différentes conditions telles que, par exemple, différentes fréquences d'agitation ou différentes conditions de rinçage effectué par submersion du verre de silice dans des tampons de lavage.

Le procédé par immersion peut également être utilisé sur des pièces plus petites, comme dans le brevet US 6 562 144 **[7].** Le procédé décrit dans ce brevet comprend les étapes consistant à (i) placer la plaque de semi-conducteur (i.e. le « wafer ») dans une chambre fermée, (ii) placer dans cette chambre la solution lavante de façon à ce que la plaque soit complètement immergée, (iii) abaisser la pression dans la chambre fermée à une valeur comprise entre 0,1 et 0,9 atm avant de revenir à une valeur de pression normale, l'abaissement de la pression étant une condition nécessaire pour obtenir un nettoyage efficace.

JP S58 225532 décrit un procédé pur purifier la surface d'étanchéité d'un panneau lors de l'étape finale de fabrication d'un écran luminescent la surface est traitée avec une solution acide.

FR 2 933 332 décrit un procédé de fabrication d'une plaque décorative.

Industriellement, le traitement de surface de pièces de grandes dimensions est effectué dans des cuves impliquant l'utilisation d'un volume conséquent de solution(s) corrosive(s) sous agitation. Celui-ci est nécessaire pour tenter d'obtenir une action du mélange d'attaque qui soit la plus homogène et efficace possible. Toutefois, les procédés utilisant une immersion dans une solution corrosive présentent les désavantages liés à la manipulation et au traitement de grands volumes de solutions corrosives. En effet, lors de chaque traitement d'acidage, la solution corrosive se trouve contaminée par les éléments éliminés de la surface à traiter entrainant de fait la nécessité de renouveler régulièrement une telle solution corrosive. Les procédés par immersion ont donc, du fait des quantités de solutions corrosives nécessaires à leur mise en œuvre puis à traiter, un coût élevé, un impact environnemental non négligeable et sont incompatibles avec des temps de traitement acide courts.

Du fait de l'intérêt quant à un procédé de traitement corrosif efficace notamment dans le domaine de l'optique, il existe donc un réel besoin d'un procédé et d'un dispositif permettant de traiter des surfaces de petites comme de grandes dimensions, en association avec l'utilisation de faibles volumes de solutions corrosives permettant de limiter les risques de contaminations croisées et d'effluents liquides ou gazeux. Un tel procédé et un tel dispositif doivent en outre garantir une homogénéité de l'épaisseur d'érosion et ce, sans conditions spécifiques particulières telles qu'un gaz environnant particulier.

### EXPOSÉ DE L'INVENTION

Les inventeurs ont atteint le but fixé et proposent un procédé et un dispositif de traitement corrosif de surfaces qui ne présentent pas les inconvénients et désavantages des procédés de l'art antérieur.

Le procédé selon l'invention est compatible avec des concentrations d'agents corrosifs et des temps de procédé très variables. En effet, la présente invention répond aux problématiques exposées ci-dessus à savoir (i) l'utilisation de très faibles quantités d'acides minéraux, de bases fortes ou de leurs mélanges, ce qui permet de renouveler le produit d'attaque et donc de limiter les risques de contaminations croisées et de réduire la quantité d'effluents liquides ou gazeux ; et (ii) l'homogénéité d'attaque, avec la maîtrise de l'épaisseur ôtée pouvant aller de 1 à plusieurs dizaines de microns et ce, même sur de grandes surfaces.

Pour ceci, le principe du procédé de l'invention réside dans l'utilisation d'un intermédiaire de diffusion de la solution corrosive permettant une attaque régulière sur toute la surface traitée. Celui-ci permet le transfert par capillarité du mélange d'attaque jusqu'à la pièce inhibant toute présence de bulles et ce, dans un temps très court, limitant ainsi les inhomogénéités d'attaque dues à des temps de contact variables notamment dans le cas de mélanges concentrés.

Le procédé de traitement de l'invention se fait dans des conditions statiques et ne nécessite aucun dispositif pour soumettre la solution corrosive à une quelconque agitation et aucune condition particulière, notamment en termes d'environnement gazeux particulier. Les conditions statiques s'entendent évidemment une fois que la surface de l'objet à traiter a été amenée au contact de l'intermédiaire de diffusion i.e. durant le contact. Ainsi, le procédé selon la présente invention se distingue des procédés de l'art antérieur dans lesquels un intermédiaire de diffusion imprégné d'une solution corrosive est utilisé pour essuyer la surface de l'objet à traiter et/ou dans lesquels la surface de l'objet à traiter se déplace ou est déplacée sur un intermédiaire de diffusion imprégné d'une solution corrosive.

Selon le type de matériaux à polir, différentes compositions corrosives peuvent être utilisées. Ainsi, de façon remarquable, le procédé et le dispositif de l'invention concernent non seulement l'acidage des surfaces et notamment des surfaces utilisées dans le domaine de l'optique mais aussi tout traitement de surfaces impliquant une solution corrosive acide ou basique.

Plus particulièrement, la présente invention concerne un procédé pour traiter une surface d'un objet, ledit procédé comprenant une étape consistant à mettre en contact la surface à traiter avec un intermédiaire de diffusion imprégné d'une solution corrosive.

Comme précédemment indiqué, le procédé est réalisé en conditions statiques. Aussi, la présente invention concerne un procédé pour traiter une surface d'un objet, ledit procédé comprenant les étapes consistant à amener en contact la surface à traiter avec un intermédiaire de diffusion puis à maintenir en contact ladite surface à traiter avec ledit intermédiaire de diffusion sans aucun mouvement relatif de l'un par rapport à l'autre, ledit intermédiaire de diffusion étant imprégné par une solution corrosive préalablement au maintien en contact ou durant ledit maintien en contact.

Par « procédé pour traiter », on entend, dans le cadre de la présente invention, un procédé permettant d'éliminer ou d'éroder chimiquement une couche de matière d'épaisseur sensiblement constante au niveau de la surface de l'objet à traiter mise en contact avec la solution corrosive.

La couche éliminée peut ne présenter aucune différence chimique ou physique avec le reste de l'objet à traiter. Dans ce cas, le procédé de traitement selon la présente invention peut être utilisé pour créer une (micro)-structuration au niveau de la surface de l'objet à traiter.

En variante, la couche éliminée peut être une couche présentant des défauts physiques ou chimiques non présents ou moins importants dans le reste de l'objet. De tels défauts peuvent notamment être, par exemple, une couche de passivation, un revêtement, des (micro)-craquages, des (micro)-fissures ou des irrégularités du type rugosité au niveau de la surface. Dans ce cas, le procédé de traitement selon la présente invention peut être utilisé pour éliminer, atténuer ou réduire ces défauts. Un tel traitement est particulièrement adapté pour les optiques en verre de silice notamment utilisés dans les grandes installations utilisant des lasers de forte puissance.

Dans le cadre de la présente invention, il est fondamental que l'épaisseur de matière éliminée ou érodée soit sensiblement constante sur toute la surface traitée. Le procédé selon la présente invention correspond donc à une élimination contrôlée de matière i.e. une élimination d'épaisseur homogène et n'affectant pas les propriétés de l'objet traité telles que les propriétés optiques et/ou électriques.

Tout objet et toute surface susceptibles d'être soumis à un traitement tel que précédemment défini peuvent être mis en œuvre dans le cadre de la présente invention.

Au sens de la présente invention, par « surface » il faut entendre la partie extérieure d'un objet ou corps solide, qui le limite en tout sens. Il est possible, pour un même objet (ou même corps solide), de définir conceptuellement différentes surfaces. L'invention s'applique à tout type de surface quelle que soit sa géométrie. Cette dernière peut être simple, comme une surface parfaitement plane, ou complexe, comme une surface rugueuse, ou présentant des cavités non obstruées et ce quel que soit le matériau constituant la surface et le reste de l'objet dont elle dépend.

Avantageusement, dans le cadre de la présente invention, la surface de l'objet à traiter peut être une surface inorganique. Plus particulièrement, cette surface peut être une surface en un matériau conducteur, en un matériau semi-conducteur et/ou en un matériau isolant.

Parmi les matériaux conducteurs avantageusement mis en œuvre dans le cadre de la présente invention, on peut citer les métaux, les métaux nobles, les métaux oxydés, les métaux de transition, les alliages métalliques et, à titre d'exemples particuliers et non limitatifs, le nickel, le zinc, l'or, le platine, le titane, l'acier, leurs mélanges et leurs alliages.

Parmi les matériaux semi-conducteurs avantageusement mis en œuvre dans le cadre de la présente invention, on peut citer, à titre d'exemples particuliers et non limitatifs, le silicium (Si), le carbure de silicium (SiC), l'arséniure de gallium (AsGa), le gallium (Ga), le phosphure d'indium (InP), leurs mélanges et leurs alliages.

Parmi les matériaux isolants avantageusement mis en œuvre dans le cadre de la présente invention, on peut citer les oxydes non conducteurs, les matériaux isolants amorphes et les matériaux isolants cristallins et, à titre d'exemples particuliers et non limitatifs, le dioxyde de silicium (SiO₂), l'oxyde d'aluminium (Al₂O₃), l'oxyde de magnésium (MgO), un verre contenant généralement des silicates, un verre de silice, une céramique et du diamant, leurs mélanges et leurs alliages.

L'objet dont on souhaite traiter la surface conformément au procédé de la présente invention peut être une optique notamment une optique en verre de silice telle comme celles mises en œuvre dans les grandes installations utilisant des lasers de forte puissance ; une électrode ou un wafer.

Cet objet peut présenter une taille et une forme quelconque. La particularité du procédé selon l'invention est qu'il est utilisable même sur des objets de grandes dimensions. Par exemple, un tel objet peut être une optique, et notamment une optique en verre de silice, dont la surface peut atteindre 0,2 m² et le poids 25 kg.

La solution corrosive susceptible d'être mise en œuvre dans le cadre de la présente invention peut être toute solution connue de l'homme du métier permettant de traiter une surface comme précédemment exposé. En d'autres termes, une solution corrosive susceptible d'être mise en œuvre dans le cadre de la présente invention est une solution capable de dissoudre une couche au niveau de la surface de l'objet à traiter avec laquelle elle est mise en contact.

Cette solution corrosive peut être une solution corrosive acide voire fortement acide ou une solution corrosive alcaline voire fortement alcaline.

Par « fortement acide », on entend une solution corrosive dont le pH est inférieur ou égal à 5, notamment inférieur à 4 et, en particulier, inférieur à 3. Une solution corrosive acide comprend un ou plusieurs acides minéraux. A titre d'exemples particuliers et non exhaustifs, une solution corrosive acide est notamment choisie parmi l'acide chlorhydrique (HCI), l'acide nitrique (HNO₃), l'acide fluorhydrique (HF), l'acide sulfurique (H₂SO₄), l'acide phosphorique (H₃PO₄), du fluorure d'ammonium (NH₄F), du difluorure d'ammonium (NH₄HF₂), une solution notamment aqueuse de HCl, une solution notamment aqueuse de HNO₃, une solution notamment aqueuse de HF, une solution notamment aqueuse de H₂SO₄, une solution notamment aqueuse de H₃PO₄, une solution notamment aqueuse de NH₄F, une solution notamment aqueuse de NH₄HF₂ et leurs mélanges. Les acides ou leurs mélanges utilisés dans la solution corrosive acide voire fortement acide peuvent se présenter sous forme d'acides concentrés.

De plus, à titre d'exemples particuliers de mélanges corrosifs acides, on peut citer (i) un mélange 100-x/x (vol/vol) de HNO₃ éventuellement concentré et de HF avec x représentant un quelconque nombre entier compris entre 1 et 99, (ii) un mélange 100-y/y (vol/vol) de HNO₃ éventuellement concentré et de HCl avec y représentant un quelconque nombre entier compris entre 1 et 99 ou (iii) un mélange 100-z/z (vol/vol) de HF et de NH₄F avec z représentant un quelconque nombre entier compris entre 1 et 99.

Par « fortement alcaline », on entend une solution dont le pH est supérieur à 9, notamment supérieur à 10 et, en particulier, supérieur à 11. L'expression « fortement alcaline » est équivalente à et interchangeable avec l'expression « fortement basique ». Une solution corrosive alcaline voire fortement alcaline comprend une ou plusieurs bases minérales fortes. A titre d'exemples particuliers et non exhaustifs, une solution corrosive alcaline voire fortement alcaline est notamment choisie parmi une solution notamment aqueuse d'hydroxyde de sodium (NaOH), une solution notamment aqueuse d'hydroxyde de potassium (KOH), une solution notamment aqueuse d'hydroxyde de calcium (Ca(OH)₂), une solution notamment aqueuse d'hydroxyde de lithium (LiOH), une solution notamment aqueuse d'hydroxyde de césium (CsOH), une solution d'hydrure de sodium (NaH) dans du NaOH fondu et leurs mélanges.

L'homme du métier connaît différentes façons de préparer de telles solutions corrosives soit en diluant ou en mélangeant des compositions commerciales existantes, soit en les préparant de façon extemporanée. L'homme du métier connaît également différentes façons pour ajuster le pH jusqu'à la valeur souhaitée, si nécessaire, notamment en utilisant des additifs permettant de tamponner la (ou les) solution(s).

De plus, l'homme du métier saura déterminer, sans effort inventif, la solution corrosive la plus adaptée en fonction de la nature chimique de la surface à traiter.

Comme précédemment décrit, la principale caractéristique du procédé selon la présente invention réside dans l'utilisation d'un intermédiaire de diffusion. Ce dernier est un support solide qui doit être poreux pour permettre une bonne imprégnation par la solution corrosive et qui doit en outre être chimiquement inerte vis-à-vis de cette solution et lors du procédé de traitement selon l'invention.

Avantageusement, l'intermédiaire de diffusion est un support solide poreux en un matériau choisi dans le groupe constitué par du papier notamment de nature cellulosique; du papier coton; de l'agarose; de la gélatine; de la cellulose; de la méthylcellulose ; de la carboxyméthylcellulose ; de la nitrocellulose ; de l'ester acétate de cellulose ; un alginate ; une polyoléfine ; une membrane poreuse et, notamment une membrane poreuse, échangeuse d'ions; une résine de type Séphadex conditionnée en membrane ou une membrane de polymère perfluoré comme le PVDF ; un tissu en feutre ; un tissu en fibre de verre ; une membrane en polymère organique tel que le polyéthylène, le polypropylène ou leurs mélanges ; un tissu en nylon ; un gel de polyacrylamide ; un gel de sépharose et un de leurs mélanges.

L'homme du métier saura déterminer, sans effort inventif, en fonction de la solution corrosive mise en œuvre, le matériau le plus adapté à utiliser pour l'intermédiaire de diffusion.

Il est avantageux que l'intermédiaire de diffusion présente une morphologie choisie, et de préférence adaptée à la surface avec laquelle il est mis en contact. Il peut présenter une zone de contact avec la surface à traiter correspondant sensiblement à cette surface.

En variante, l'intermédiaire de diffusion peut présenter une zone de contact de forme originale qui peut, par exemple, correspondre à des caractères alphanumériques ou à des idéogrammes. La zone de contact peut être continue ou discontinue. Ainsi l'intermédiaire de diffusion peut présenter une zone de contact avec la surface à traiter, discontinue à des échelles variables et aussi bien centimétriques, millimétriques, micrométriques que nanométriques.

A cet effet, l'intermédiaire de diffusion peut avoir été soumis à une étape de découpe et ce, préalablement à la mise en œuvre du procédé selon l'invention. Avantageusement, cette découpe est choisie parmi une découpe par attaque chimique sélective, une découpe physique du type gravure ionique réactive (ou RIE pour « Reactive Ion Etching »), une découpe manuelle telle qu'un emboutissage et une découpe au laser tel qu'un laser pulsé avec notamment une source de type YAG (acronyme anglais pour « Yttrium Aluminium Garnet » ou grenat d'yttrium et d'aluminium) ou un laser continu notamment un laser à source CO₂. Ces lasers permettent d'obtenir une résolution de l'ordre de 5 à 10 µm.

Il est également possible d'obtenir des surfaces traitées de forme particulière et notamment discontinue par d'autres moyens. A titre d'exemples, on peut citer l'application, préalablement à la mise en œuvre du procédé selon l'invention, (i) d'un masque sur la surface à traiter ou (ii) d'un masque sur et dans l'intermédiaire de diffusion, lesdits masques devant résister à la solution corrosive mise en œuvre lors du traitement. Un tel masque peut notamment se présenter sous forme d'une résine photosensible résistante à la solution corrosive employée lors du traitement. A titre d'exemples de telles résines, on peut citer la résine ProTEK PSA (Brewer Science, Inc. Rolla, MO) **[8]**.

Dans une 1^{ère} forme de mise en œuvre de l'invention, le procédé comprend les étapes successives consistant à :
a'₁) imprégner l'intermédiaire de diffusion notamment tel que précédemment défini par une solution corrosive notamment telle que précédemment définie ;
b'₁) mettre en contact l'intermédiaire de diffusion imprégné obtenu suite à l'étape (a'₁) avec la surface de l'objet à traiter notamment tels que précédemment définis.

Ainsi, le procédé de cette 1^{ère} forme de mise en œuvre de l'invention comprend les étapes successives consistant à :
a₁) imprégner l'intermédiaire de diffusion notamment tel que précédemment défini par une solution corrosive notamment telle que précédemment définie ;
b₁) amener en contact la surface de l'objet à traiter notamment tels que précédemment définis avec l'intermédiaire de diffusion imprégné obtenu suite à l'étape (a₁) puis maintenir en contact ladite surface de l'objet à traiter avec ledit intermédiaire de diffusion imprégné sans aucun mouvement relatif de l'un par rapport à l'autre.

Toute technique connue pour imprégner par une solution un support poreux est utilisable dans le cadre de la présente invention. Toutefois, compte-tenu du caractère hautement corrosif de la solution utilisée, les techniques utilisant de faibles quantités de solution seront favorisées.

A titre d'exemples de protocoles d'imprégnation mis en œuvre lors de l'étape (a₁) ou (a'₁) du procédé selon l'invention, on peut citer une imprégnation par dépôt ou application de la solution corrosive sur l'intermédiaire de diffusion, par injection de la solution corrosive au sein de l'intermédiaire de diffusion ou en faisant tremper l'intermédiaire de diffusion dans la solution corrosive. Le dépôt, l'application ou l'injection peuvent être réalisés en un point ou une zone unique de l'intermédiaire de diffusion ou, au contraire, en différents points ou différentes zones de cet intermédiaire. Ce dépôt, cette application ou cette injection peuvent mettre en œuvre une (ou plusieurs) pipette(s), une (ou plusieurs) seringue(s), une (ou plusieurs) pompe(s) péristaltique(s) et/ou un trempage.

L'imprégnation est généralement réalisée jusqu'à saturation de l'intermédiaire de diffusion, i.e. celui-ci n'est plus en mesure d'absorber la solution corrosive. A cet effet, il peut être nécessaire d'effectuer plusieurs fois l'étape d'imprégnation i.e. de répéter l'étape (a₁) ou (a'₁) pour parvenir à la concentration de saturation dans l'intermédiaire de diffusion.

Toute technique connue pour appliquer i.e. pour amener en contact un 1^{er} objet (dans le cas présent, l'objet à traiter) sur un autre objet (dans le cas présent, l'intermédiaire de diffusion imprégné) est utilisable dans le cadre de l'étape (b₁) ou (b'₁) du procédé de la présente invention.

Cette application peut se faire de façon manuelle ou être mécaniquement assistée notamment aux moyens d'un système de basculement pivotement ou d'un système de déplacement vertical.

Dans une 2^{ème} forme de mise en œuvre de l'invention, le procédé comprend les étapes successives consistant à :
a'₂) mettre en contact l'intermédiaire de diffusion notamment tel que précédemment défini avec la surface de l'objet à traiter notamment tels que précédemment définis puis
b'₂) imprégner l'intermédiaire de diffusion notamment tel que précédemment défini par une solution corrosive notamment telle que précédemment définie.

Ainsi, le procédé de cette 2^{nde} forme de mise en œuvre de l'invention comprend les étapes successives consistant à :
a₂) amener en contact la surface de l'objet à traiter notamment tels que précédemment définis avec l'intermédiaire de diffusion notamment tel que précédemment défini puis maintenir en contact ladite surface de l'objet à traiter avec ledit intermédiaire de diffusion sans aucun mouvement relatif de l'un par rapport à l'autre ;
b₂) imprégner, durant ledit maintien en contact, l'intermédiaire de diffusion notamment tel que précédemment défini par une solution corrosive notamment telle que précédemment définie.

Cette forme de mise en œuvre se distingue de la précédente par l'imprégnation par la solution corrosive intervenant une fois l'intermédiaire de diffusion et la surface à traiter mis en contact l'un avec l'autre i.e. une fois la surface à traiter amenée en contact avec l'intermédiaire de diffusion. L'imprégnation par la solution d'activation se fait donc durant le maintien en contact de la surface à traiter avec l'intermédiaire de diffusion.

Tout ce qui a été précédemment décrit pour les étapes (a₁)/(a'₁) et (b₁)/(b'₁) s'applique *mutatis mutandis* aux étapes (b₂)/(b'₂) et (a₂)/(a'₂) respectivement. A noter qu'en ce qui concerne l'étape d'imprégnation (b₂) ou (b'₂), les techniques et moyens permettant d'obtenir une imprégnation rapide de la solution corrosive et uniforme dans tout l'intermédiaire de diffusion telles que des applications ou injections multipoints seront favorisées.

Aussi bien dans la 1^{ère} que dans la 2^{ème} formes de mise en œuvre, il est possible d'appliquer une pression à l'objet de façon à obtenir un bon contact entre la surface à traiter et l'intermédiaire de diffusion et éventuellement à éliminer les bulles qui pourraient se trouver au niveau de la zone de contact. Cette pression peut être aussi bien manuelle que mécanique.

Aussi bien dans la 1^{ère} que dans la 2^{ème} formes de mise en œuvre, le temps de contact entre la surface à traiter et l'intermédiaire de diffusion imprégné par la solution corrosive peut durer entre 1 min et 10 h, notamment entre 2 min et 5 h et, en particulier, entre 5 min et 1 h et, par exemple, de l'ordre de 10 min (i.e. 10 min ± 3 min).

Une fois les étapes (a₁)/(a'₁) et (b₁)/(b'₁) ou les étapes (a₂)/(a'₂) et (b₂)/(b'₂) réalisées, la surface traitée peut être rincée par une solution de rinçage adaptée à la solution de corrosion. Avantageusement, une telle solution de rinçage est de l'eau et notamment de l'eau désionisée.

Suite à cette étape de rinçage, les étapes (a₁)/(a'₁) et (b₁)/(b'₁) ou les étapes (a₂)/(a'₂) et (b₂)/(b'₂) peuvent être répétées tout comme l'étape de rinçage subséquente. Lors de cette répétition, l'intermédiaire de diffusion est avantageusement remplacé par un nouvel intermédiaire de diffusion de nature identique ou différente à l'intermédiaire de diffusion précédemment utilisé et imprégné par une solution corrosive identique ou différente à la solution corrosive précédemment utilisée. Le remplacement de l'intermédiaire de diffusion est une garantie d'un traitement dans des conditions optimales sans contamination de ce dernier et perte d'efficacité pour la solution corrosive qu'il contient.

Le procédé de traitement selon la présente invention peut être réalisé dans une large gamme de températures. Il est toutefois généralement réalisé à température ambiante d'un laboratoire ou d'un atelier, soit entre 18 et 26°C.

La présente invention concerne également un dispositif susceptible d'être mis en œuvre dans le cadre d'un procédé tel que précédemment défini, ledit dispositif schématisé à la Figure unique comprenant :
(i') une base fixe (1) sur laquelle est déposé l'intermédiaire de diffusion (2) notamment tel que précédemment défini ; et
(ii') un élément comprenant une partie mobile (3) sur laquelle est fixé l'objet à traiter (4) et apte à mettre en contact la surface dudit objet à traiter avec ledit intermédiaire de diffusion (2).

En d'autres termes, la présente invention concerne également un dispositif susceptible d'être mis en œuvre dans le cadre d'un procédé tel que précédemment défini, ledit dispositif schématisé à la Figure unique comprenant :
(i) une base fixe (1) sur laquelle est déposé l'intermédiaire de diffusion (2) notamment tel que précédemment défini ; et
(ii) un élément comprenant une partie mobile (3) sur laquelle est fixé l'objet à traiter (4) et apte à amener en contact la surface dudit objet à traiter avec ledit intermédiaire de diffusion (2),
ledit dispositif ne comprenant aucun élément apte à déplacer ladite surface mise en contact avec ledit intermédiaire de diffusion par rapport audit intermédiaire de diffusion.

Dans le dispositif selon la présente invention, la base fixe (1) est avantageusement un récipient ou une plaque dont la taille est adaptée pour contenir ou supporter l'intermédiaire de diffusion. Une telle base fixe est typiquement en un matériau inerte en présence de la solution corrosive tel que du téflon ou de l'acier inoxydable.

Dans le dispositif selon la présente invention, l'élément comprenant la partie mobile (3) peut être mécaniquement connecté à la base fixe (2). En variante, la base fixe (2) peut être déposée sur l'élément comprenant la partie mobile (3). La partie mobile (3) comprend des moyens aptes à maintenir ou fixer l'objet (4) dont on souhaite traiter la surface. Avantageusement, ces moyens ne sont pas positionnés sur la surface à traiter et font prise sur les autres surfaces de l'objet.

En outre, l'élément comprenant la partie mobile (3) présente un (ou plusieurs) moyen(s) permettant de déplacer la partie mobile (3) entre une position éloignée de la surface de l'objet à traiter et une position en contact physique avec cette surface. Ce (ou ces) moyen(s) est(sont) choisi(s) dans le groupe constitué par un axe de basculement, un axe de pivotement, un rail de guidage vertical et un mécanisme d'entraînement pour déplacer verticalement la partie mobile (3).

Le dispositif selon la présente invention peut en outre comprendre (iii) des moyens pour (i.e. aptes à ou adaptés pour) imprégner l'intermédiaire de diffusion avec la solution corrosive notamment telle que précédemment définie. Ces moyens, non représentés sur la Figure unique, sont avantageusement choisis dans le groupe constitué par une (ou plusieurs) pipette(s), une (ou plusieurs) seringue(s), une (ou plusieurs) pompe(s) péristaltique(s) et/ou des moyens de trempage. Ces moyens peuvent être en contact fluidique avec un récipient contenant la solution corrosive et ce, notamment dans le cas de moyens sous forme de pompe(s) péristaltique(s).

D'autres caractéristiques et avantages de la présente invention apparaîtront encore à l'homme du métier à la lecture des exemples ci-dessous donnés à titre illustratif et non limitatif, en référence à la figure unique annexée.

### BRÈVE DESCRIPTION DES DESSINS

La Figure unique est une schématisation vue de côté d'un dispositif selon la présente invention.

### EXPOSÉ DÉTAILLÉ DE MODES DE RÉALISATION PARTICULIERS

Dans chaque exemple, le dispositif dont le principe est décrit dans la Figure unique est utilisé.

### Exemple 1

Une pièce optique en silice de 400 cm x 400 cm x 1 cm est mise en contact avec un mélange d'acide nitrique (80 %) et d'acide fluorhydrique (20 %) via un tissu.

### Exemple 2

Une plaque en métal de 400 cm x 400 cm x 1 cm est mise en contact avec de l'acide chlorhydrique concentré, via un tissu.

### Exemple 3 : préparation d'une solution corrosive acide de traitement

Pour préparer celle-ci, on mélange, dans une fiole, 80 mL d'acide fluorhydrique concentré à 40 % (Prolabo - AnalaR NORMAPUR ; référence 20307.290) et 20 mL d'acide nitrique concentré à 65 % (Prolabo - AnalaR NORMAPUR ; référence 20429.291). On agite manuellement ce mélange pendant 15 s.

### Exemple 4 : préparation d'une solution corrosive basique de traitement

Pour préparer celle-ci, on mélange, dans une fiole, 20 g de soude (référence EMSURE ISO, pastilles pour analyses) et 30 mL d'eau de qualité 3 selon la norme NF EN 3696 (résistivité 18,2 MΩ.cm à 25°C). On agite manuellement ce mélange pendant quelques minutes jusqu'à dissolution complète des pastilles. En raison de l'exothermie de cette dissolution, il convient d'attendre le retour à température ambiante de la solution ainsi obtenue.

### Exemple 5 : mise en évidence de la diffusion d'une solution de traitement acide au travers d'un intermédiaire en polypropylène

Dans un système de rétention, on dépose trois gouttes d'environ 0,05 cm³ de solution acide, préparée selon l'exemple 3, selon la forme d'un triangle et en les espaçant les unes des autres d'environ 3 cm. On place un échantillon de tissu polypropylène (Pig Mat Haz Mat, Rip and Fit) par-dessus ces gouttes. Puis on pose une pièce en silice transparente (diamètre : 100 mm, densité : 2,2) par-dessus ce tissu.

Après une heure de contact, on retire la pièce en silice. Puis on rince pendant 30 s la face traitée à l'aide d'une pissette d'eau de qualité 3 selon la norme NF EN 3696 (résistivité 18,2 MΩ.cm à 25°C). Ensuite, on réalise un rinçage à l'aide d'une pissette d'éthanol absolu pendant 30 s.

Suite à ces opérations, une zone brumeuse apparait au-dessus de chaque goutte sur la pièce en silice. La diffusion d'une solution de traitement acide au travers d'un intermédiaire de type tissu en polypropylène est ainsi démontrée.

### Exemple 6 : mise en évidence de la diffusion d'une solution de traitement basique au travers d'un intermédiaire en polypropylène

Dans un système de rétention, on dépose deux gouttes d'environ 0,05 cm³ de solution basique, préparée selon l'exemple 4, en les espaçant les unes des autres d'environ 2 cm. On place un échantillon de tissu polypropylène (Pig Mat Haz Mat, Rip and Fit) par-dessus ces gouttes. Puis on pose une pièce en aluminium (longueur : 30 mm, largeur 15 mm) par-dessus ce tissu.

Après une heure de contact, on retire la pièce en aluminium. Puis on rince pendant 30 s la face traitée à l'aide d'une pissette d'eau de qualité 3 selon la norme NF EN 3696 (résistivité 18,2 MΩ.cm à 25°C). Ensuite, on réalise un rinçage à l'aide d'une pissette d'éthanol absolu pendant 30 s.

Suite à ces opérations, une zone brumeuse apparait au-dessus de chaque goutte sur la pièce en aluminium La diffusion d'une solution de traitement basique au travers d'un intermédiaire de type tissu en polypropylène est ainsi démontrée.

### Exemple 7 : traitement d'une surface en silice sur un intermédiaire de diffusion imprégné par une solution corrosive acide de traitement

On pèse l'échantillon en silice à traiter (diamètre : 100 mm, densité : 2,2). Puis on découpe un intermédiaire en tissu polypropylène (Pig Mat Haz Mat, Rip and Fit), à la forme de l'échantillon en silice. Cet intermédiaire est imbibé avec la solution corrosive acide préparée selon l'exemple 3. Ensuite, la pièce en silice est posée sur l'intermédiaire.

Après une heure de contact, on retire la pièce en silice. Puis on rince la face traitée pendant 30 s à l'aide d'une pissette d'eau de qualité 3 selon la norme NF EN 3696 (résistivité 18,2 MΩ.cm à 25°C). Ensuite, on réalise un rinçage sur cette même face à l'aide d'une pissette d'éthanol absolu pendant 30 s.

Une pesée est alors réalisée. En comparant celle-ci à la pesée initiale, on obtient une érosion d'une épaisseur estimée de 31 µm.

### Exemple 8 : traitement d'une surface en aluminium sur un intermédiaire de diffusion imprégné par une solution corrosive acide de traitement

Au préalable, on réalise une mesure de rugosité sur l'échantillon en aluminium à traiter (longueur : 30 mm, largeur 15 mm). Le matériel utilisé est un modèle Hand-held Roughness Tester TR200 de la société TIME Group Inc. La hauteur totale du profil (Rₜ) de l'échantillon concerné est d'environ 11 µm.

On découpe un intermédiaire en tissu polypropylène (Pig Mat Haz Mat, Rip and Fit), à la forme de l'échantillon en aluminium. Puis, on imbibe cet intermédiaire avec la solution corrosive acide préparée selon l'exemple 3. Ensuite, la pièce en aluminium est posée sur l'intermédiaire.

A l'issue de quatre heures de traitement, on retire la pièce en aluminium. Puis on rince la face traitée pendant 30 s à l'aide d'une pissette d'eau de qualité 3 selon la norme NF EN 3696 (résistivité 18,2 MΩ.cm à 25°C). Ensuite, on réalise un rinçage sur cette même face à l'aide d'une pissette d'éthanol absolu pendant 30 s.

L'aspect visuel de l'échantillon est fortement modifié et celui-ci est plus rugueux au toucher. Une mesure de rugosité est alors réalisée. Elle met en évidence une élévation de la hauteur totale du profil (Rₜ) entre la surface en aluminium avant et après traitement, celle-ci atteint une valeur d'environ 19 µm.

### Exemple 9 : traitement d'une surface en aluminium sur un intermédiaire de diffusion imprégné par une solution corrosive basique de traitement

Au préalable, on réalise une mesure de rugosité sur l'échantillon en aluminium à traiter (longueur : 30 mm, largeur 15 mm). Le matériel utilisé est un modèle Hand-held Roughness Tester TR200 de la société TIME Group Inc. La hauteur totale du profil (Rₜ) de l'échantillon concerné est d'environ 8 µm.

On découpe un intermédiaire en tissu polypropylène (Pig Mat Haz Mat, Rip and Fit), à la forme de l'échantillon en aluminium. Puis, on imbibe cet intermédiaire avec la solution corrosive basique préparée selon l'exemple 4. Ensuite, la pièce en aluminium est posée sur l'intermédiaire.

A l'issue de quatre heures de traitement, on retire la pièce en aluminium. Puis on rince la face traitée pendant 30 s à l'aide d'une pissette d'eau de qualité 3 selon la norme NF EN 3696 (résistivité 18,2 MΩ.cm à 25°C). Ensuite, on réalise un rinçage sur cette même face à l'aide d'une pissette d'éthanol absolu pendant 30 s.

L'aspect visuel de l'échantillon est fortement modifié et celui-ci est plus rugueux au toucher. Une mesure de rugosité est alors réalisée. Elle met en évidence une élévation de la hauteur totale du profil (Rₜ) entre la surface en aluminium avant et après traitement, celle-ci atteint une valeur d'environ 33 µm.

### RÉFÉRENCES BIBLIOGRAPHIQUES

**[1]** Article de Néauport et al, 2005, « Polishing-induced contamination of fused silica optics and laser induced damage density at 351 nm », Optics Express, vol. 13, 10163.
**[2]** Article de Pilon, 2007, « Acidage et caractérisation de surface et sub-surface de la silice », CEA/Le Ripault. Rapport des activités Scientifiques et Techniques 2003-2005, page 80-81.
**[3]** Brevet US 6 649 077 au nom de Taiwan Semiconductor Manufacturing Co. Ltd, publié le 18 novembre 2003.
**[4]** Demande internationale WO 2009/142704 au nom de Eastman Kodak Company, publiée le 26 novembre 2009.
[5] Demande de brevet US 2011/0079931 au nom de Lawrence Livermore National Security LLC, publié le 7 avril 2011.
[6] Article de Suratwala et al, 2010, « HF-based etching processes for improving laser damage résistance of fused silica optical surfaces », J. Am. Ceram. Soc., DOI : 10.1111/j.1551-2916.2010.04112.
**[7]** Brevet US 6 562 144 au nom de Macronix international Co., Ltd., publié le 13 mai 2003.
**[8]** Article de Nagarah et Wagenaar, 2012, « Ultradeep fused silica glass etching with an HF-resistant photosensitive resist for optical imaging applications ». J. Micromech. Microeng., vol. 22, 035011.

## Revendications

1. Procédé pour traiter une surface d'un objet, **caractérisé en ce que** ledit procédé comprend les étapes consistant à amener en contact la surface à traiter avec un intermédiaire de diffusion puis à maintenir en contact ladite surface à traiter avec ledit intermédiaire de diffusion sans aucun mouvement relatif de l'un par rapport à l'autre,
ledit intermédiaire de diffusion étant imprégné par une solution corrosive préalablement au maintien en contact ou durant ledit maintien en contact, et
ledit intermédiaire de diffusion étant un support solide, poreux et chimiquement inerte vis-à-vis de ladite solution corrosive.

2. Procédé selon la revendication 1, **caractérisé en ce que** ladite surface est une surface en un métal, un métal noble, un métal oxydé, un métal de transition ou un alliage métallique.

3. Procédé selon la revendication 1, **caractérisé en ce que** ladite surface est une surface en silicium (Si), en carbure de silicium (SiC), en arséniure de gallium (AsGa), en gallium (Ga), en phosphure d'indium (InP), en un de leurs mélanges ou en un de leurs alliages.

4. Procédé selon la revendication 1, **caractérisé en ce que** ladite surface est une surface en dioxyde de silicium (SiO₂), en oxyde d'aluminium (Al₂O₃), en oxyde de magnésium (MgO), en verre, en verre de silice, en céramique, en diamant, en un de leurs mélanges ou en un de leurs alliages.

5. Procédé selon l'une quelconque des revendications 1 à 4, **caractérisé en ce que** ladite solution corrosive est une solution corrosive acide choisie parmi l'acide chlorhydrique (HCl), l'acide nitrique (HNO₃), l'acide fluorhydrique (HF), l'acide sulfurique (H₂SO₄), l'acide phosphorique (H₃PO₄), du fluorure d'ammonium (NH₄F), du difluorure d'ammonium (NH₄HF₂), une solution notamment aqueuse de HCl, une solution notamment aqueuse de HNO₃, une solution notamment aqueuse de HF, une solution notamment aqueuse de H₂SO₄, une solution notamment aqueuse de H₃PO₄, une solution notamment aqueuse de NH₄F, une solution notamment aqueuse de NH₄HF₂ et un de leurs mélanges.

6. Procédé selon l'une quelconque des revendications 1 à 4, **caractérisé en ce que** ladite solution corrosive est une solution corrosive alcaline choisie parmi une solution notamment aqueuse d'hydroxyde de sodium (NaOH), une solution notamment aqueuse d'hydroxyde de potassium (KOH), une solution notamment aqueuse d'hydroxyde de calcium (Ca(OH)₂), une solution notamment aqueuse d'hydroxyde de césium (CsOH), une solution notamment aqueuse d'hydroxyde de lithium (LiOH), une solution d'hydrure de sodium (NaH) dans du NaOH fondu et un de leurs mélanges.

7. Procédé selon l'une quelconque des revendications précédentes, **caractérisé en ce que** ledit intermédiaire de diffusion est un support solide poreux en un matériau choisi dans le groupe constitué par du papier notamment de nature cellulosique; du papier coton ; de l'agarose ; de la gélatine ; de la cellulose; de la méthylcellulose ; de la carboxyméthylcellulose ; de la nitrocellulose ; de l'ester acétate de cellulose; un alginate; une polyoléfine; une membrane poreuse et, notamment une membrane poreuse, échangeuse d'ions ; une résine de type Séphadex conditionnée en membrane ou une membrane de polymère perfluoré comme le PVDF ; une membrane en polymère organique tel que le polyéthylène, le polypropylène ou leurs mélanges ; un tissu en feutre ; un tissu en fibre de verre ; un tissu en nylon ; un gel de polyacrylamide et un gel de sépharose et un de leurs mélanges.

8. Procédé selon l'une quelconque des revendications 1 à 7, **caractérisé en ce que** ledit procédé comprend les étapes successives consistant à :
a₁) imprégner l'intermédiaire de diffusion par une solution corrosive ;
b₁) amener en contact la surface de l'objet à traiter avec l'intermédiaire de diffusion imprégné obtenu suite à l'étape (a₁) puis maintenir en contact ladite surface de l'objet à traiter avec ledit intermédiaire de diffusion imprégné sans aucun mouvement relatif de l'un par rapport à l'autre.

9. Procédé selon l'une quelconque des revendications 1 à 7, **caractérisé en ce que** ledit procédé comprend les étapes successives consistant à :
a₂) amener en contact la surface de l'objet à traiter avec l'intermédiaire de diffusion puis maintenir en contact ladite surface de l'objet à traiter avec ledit intermédiaire de diffusion sans aucun mouvement relatif de l'un par rapport à l'autre ;
b₂) imprégner, durant ledit maintien en contact, l'intermédiaire de diffusion par une solution corrosive.

10. Dispositif susceptible d'être mis en œuvre dans le cadre d'un procédé tel que défini à l'une quelconque des revendications précédentes, ledit dispositif comprenant :
(i) une base fixe (1) sur laquelle est déposé l'intermédiaire de diffusion (2) ; et
(ii) un élément comprenant une partie mobile (3) sur laquelle est fixé l'objet à traiter (4) et apte à amener en contact la surface dudit objet à traiter avec ledit intermédiaire de diffusion (2),
ledit dispositif ne comprenant aucun élément apte à déplacer ladite surface mise en contact avec ledit intermédiaire de diffusion par rapport audit intermédiaire de diffusion et
ledit intermédiaire de diffusion étant un support solide, poreux et chimiquement inerte vis-à-vis de ladite solution corrosive.

11. Dispositif selon la revendication 10, **caractérisé en ce que** ledit dispositif comprend en outre (iii) des moyens pour imprégner l'intermédiaire de diffusion avec la solution corrosive.

## Patentansprüche

1. Verfahren zum Behandeln einer Oberfläche eines Gegenstandes,
**dadurch gekennzeichnet, dass** das Verfahren die Schritte umfasst, die zu behandelnde Oberfläche mit einem Diffusionszwischenprodukt in Kontakt zu bringen und dann die zu behandelnde Oberfläche in Kontakt mit dem Diffusionszwischenprodukt ohne jegliche Relativbewegung zueinander zu halten,
wobei das Diffusionszwischenprodukt vor dem Kontakthalten oder während des Kontakthaltens mit einer korrosiven Lösung imprägniert wird, und
wobei das Diffusionszwischenprodukt ein fester, poröser und gegenüber der korrosiven Lösung chemisch inerter Träger ist.

2. Verfahren nach Anspruch 1,
**dadurch gekennzeichnet, dass** die Oberfläche eine Oberfläche aus einem Metall, einem Edelmetall, einem oxidierten Metall, einem Übergangsmetall oder einer Metalllegierung ist.

3. Verfahren nach Anspruch 1,
**dadurch gekennzeichnet, dass** die Oberfläche eine Oberfläche aus Silizium (Si), Siliziumkarbid (SiC), Galliumarsenid (AsGa), Gallium (Ga), Indiumphosphid (InP), einem Gemisch davon oder einer Legierung davon ist.

4. Verfahren nach Anspruch 1,
**dadurch gekennzeichnet, dass** die Oberfläche eine Oberfläche aus Siliziumdioxid (SiO₂), Aluminiumoxid (Al₂O₃), Magnesiumoxid (MgO), Glas, Quarzglas, Keramik, Diamant, einem Gemisch davon oder einer Legierung davon ist.

5. Verfahren nach einem der Ansprüche 1 bis 4,
**dadurch gekennzeichnet, dass** die korrosive Lösung eine saure korrosive Lösung ist, ausgewählt aus Salzsäure (HCl), Salpetersäure (HNO₃), Flusssäure (HF), Schwefelsäure (H₂SO₄), Phosphorsäure (H₃PO₄), Ammoniumfluorid (NH₄F), Ammoniumdifluorid (NH₄HF₂), einer insbesondere wässrigen Lösung von HCl, einer insbesondere wässrigen Lösung von HNO₃, einer insbesondere wässrigen Lösung von HF, einer insbesondere wässrigen Lösung von H₂SO₄, einer insbesondere wässrigen Lösung von H₃PO₄, einer insbesondere wässrigen Lösung von NH₄F, einer insbesondere wässrigen Lösung von NH₄HF₂ und einem Gemisch davon.

6. Verfahren nach einem der Ansprüche 1 bis 4,
**dadurch gekennzeichnet, dass** die korrosive Lösung eine alkalische korrosive Lösung ist, ausgewählt aus einer insbesondere wässrigen Lösung von Natriumhydroxid (NaOH), einer insbesondere wässrigen Lösung von Kaliumhydroxid (KOH), einer insbesondere wässrigen Lösung von Calciumhydroxid (Ca(OH)₂), einer insbesondere wässrigen Lösung von Cäsiumhydroxid (CsOH), einer insbesondere wässrigen Lösung von Lithiumhydroxid (LiOH), einer Lösung von Natriumhydrid (NaH) in geschmolzenem NaOH und einem Gemisch davon.

7. Verfahren nach einem der vorhergehenden Ansprüche,
**dadurch gekennzeichnet, dass** das Diffusionszwischenprodukt ein fester, poröser Träger aus einem Material ist, ausgewählt aus der Gruppe bestehend aus Papier, insbesondere von Cellulose-Art; Baumwollpapier; Agarose; Gelatine; Cellulose; Methylcellulose; Carboxymethylcellulose; Nitrocellulose; Celluloseacetatester; Alginat; Polyolefin; einer porösen Membran und insbesondere einer porösen lonenaustauschmembran; einem membranumhüllten Harz vom Typ Sephadex (Dextran-Epichlorhydrin-Copolymer) oder einer Membran aus Perfluorpolymer, wie PVDF; einer Membran aus organischem Polymer, wie Polyethylen, Polypropylen oder Gemischen davon; Filzgewebe; Glasfasergewebe; Nylongewebe; Polyacrylamidgel und Sepharosegel sowie einem Gemisch davon.

8. Verfahren nach einem der Ansprüche 1 bis 7,
**dadurch gekennzeichnet, dass** das Verfahren die nachstehenden, aufeinanderfolgenden Schritte umfasst:
a₁) Imprägnieren des Diffusionszwischenprodukts mit einer korrosiven Lösung;
b₁) Inkontaktbringen der zu behandelnden Oberfläche des Objekts mit dem imprägnierten Diffusionszwischenprodukt, das als Ergebnis von Schritt (a₁) erhalten wurde, und anschließendes Halten der zu behandelnden Oberfläche des Objekts in Kontakt mit dem imprägnierten Diffusionszwischenprodukt ohne jegliche Relativbewegung zueinander.

9. Verfahren nach einem der Ansprüche 1 bis 7,
**dadurch gekennzeichnet, dass** das Verfahren die nachstehenden, aufeinanderfolgenden Schritte umfasst:
a₂) Inkontaktbringen der zu behandelnden Oberfläche des Objekts mit dem Diffusionszwischenprodukt und anschließendes Halten der zu behandelnden Oberfläche des Objekts in Kontakt mit dem Diffusionszwischenprodukt ohne jegliche Relativbewegung zueinander;
b₂) Imprägnieren des Diffusionszwischenprodukts mit einer korrosiven Lösung während des Kontakthaltens.

10. Vorrichtung, die in einem Verfahren nach einem der vorangehenden Ansprüche anwendbar ist, wobei die Vorrichtung enthält:
(i) eine feste Basis (1), auf der das Diffusionszwischenprodukt (2) aufgebracht ist; und
(ii) ein Element mit einem beweglichen Teil (3), an dem der zu behandelnde Gegenstand (4) befestigt ist und das dazu geeignet ist, die Oberfläche des zu behandelnden Gegenstandes in Kontakt mit dem Diffusionszwischenprodukt (2) zu bringen,
wobei die Vorrichtung kein Element enthält, das die mit dem Diffusionszwischenprodukt in Kontakt gebrachte Oberfläche relativ zu dem Diffusionszwischenprodukt bewegen kann, und
wobei das Diffusionszwischenprodukt ein fester, poröser und gegenüber der korrosiven Lösung chemisch inerter Träger ist.

11. Vorrichtung nach Anspruch 10,
**dadurch gekennzeichnet, dass** die Vorrichtung ferner (iii) Mittel zum Imprägnieren des Diffusionszwischenprodukts mit der korrosiven Lösung enthält.

## Claims

1. A method for treating a surface of an object, **characterized in that** said method comprises the steps consisting of bringing the surface to be treated into contact with a diffusion intermediate and then of maintaining said surface to be treated in contact with said diffusion intermediate without any movement relative to each other,
said diffusion intermediate being impregnated with a corrosive solution prior to contacting or during said contacting, and
said diffusion intermediate being a solid, porous support chemically inert towards said corrosive solution.

2. The method according to claim 1, **characterized in that** said surface is a surface in a metal, a noble metal, an oxidized metal, a transition metal or a metal alloy.

3. The method according to claim 1, **characterized in that** said surface is a surface in silicon (Si), in silicon carbide (SiC), in gallium arsenide (AsGa), in gallium (Ga), in indium phosphide (InP), in one of their mixtures or in one of their alloys.

4. The method according to claim 1, **characterized in that** said surface is a surface in silicon dioxide (SiO₂), in aluminium oxide (Al₂O₃), in magnesium oxide (MgO), in glass, in silica glass, in ceramic, in diamond, in one of their mixtures or in one of their alloys.

5. The method according to any one of claims 1 to 4, **characterized in that** said corrosive solution is an acid corrosive solution selected from among hydrochloric acid (HCI), nitric acid (HNO₃), hydrofluoric acid (HF), sulfuric acid (H₂SO₄), phosphoric acid (H₃PO₄), ammonium fluoride (NH₄F), ammonium difluoride (NH₄HF₂), a notably aqueous HCI solution, a notably aqueous HNO₃ solution, a notably aqueous HF solution, a notably aqueous H₂SO₄ solution, a notably aqueous H₃PO₄ solution, a notably aqueous NH₄F solution, a notably aqueous NH₄HF₂ solution and one of their mixtures.

6. The method according to any one of claims 1 to 4, **characterized in that** said corrosive solution is an alkaline corrosive solution selected from a notably aqueous solution of sodium hydroxide (NaOH), a notably aqueous solution of potassium hydroxide (KOH), a notably aqueous solution of calcium hydroxide (Ca(OH)₂), a notably aqueous solution of cesium hydroxide (CsOH), a notably aqueous solution of lithium hydroxide (LiOH), a solution of sodium hydride (NaH) in molten NaOH and one of their mixtures.

7. The method according to any one of the preceding claims, **characterized in that** said diffusion intermediate is a porous solid support in a material selected from the group consisting of paper notably of a cellulose nature; cotton paper; agarose; gelatin; cellulose; methylcellulose; carboxymethylcellulose; nitrocellulose; cellulose acetate ester; an alginate; a polyolefin; a porous membrane and notably an ion exchange porous membrane; a resin of the sephadex type packaged as a membrane or a membrane of a perfluorinated polymer such as PVDF; a membrane in an organic polymer such as polyethylene, polypropylene or mixtures thereof; a felt fabric; a glass fiber fabric; a nylon fabric; a polyacrylamide gel and a sepharose gel and one of their mixtures.

8. The method according to any one of claims 1 to 7, **characterized in that** said method comprises the successive steps consisting of:
a₁) impregnating the diffusion intermediate with a corrosive solution;
b₁) bringing the surface of the object to be treated in contact with the impregnated diffusion intermediate obtained subsequently to step (a₁) and then maintaining said surface of the object to be treated in contact with said impregnated diffusion intermediate without any movement relatively to each other.

9. The method according to any one of claims 1 to 7, **characterized in that** said method comprises the successive steps consisting of:
a₂) bringing the surface of the object to be treated in contact with the diffusion intermediate and then maintaining said surface of the object to be treated in contact with said diffusion intermediate without any movement relatively to each other;
b₂) impregnating, during said contacting, the diffusion intermediate with a corrosive solution.

10. A device which may be implemented within the scope of a method as defined in any one of the preceding claims, said device comprising:
(i) a fixed base (1) on which is deposited the diffusion intermediate (2); and
(ii) an element comprising a movable portion (3) on which is attached the object to be treated (4) and capable of bringing the surface of said object to be treated into contact with said diffusion intermediate (2),
said device not comprising any element capable of displacing said surface put into contact with said diffusion intermediate relatively to said diffusion intermediate,
said diffusion intermediate being a solid, porous support chemically inert towards said corrosive solution.

11. The device according to claim 10, **characterized in that** said device further comprises (iii) means for impregnating the diffusion intermediate with the corrosive solution.
